# EUROPEAN PATENT SPECIFICATION

(11) **EP 1 877 162 B1**
(45) Date of publication and mention of the grant of the patent: **01.09.2010**
(21) Application number: 06731738.8
(22) Date of filing: 06.04.2006
(51) Int. Cl.: B01D 53/94, B01D 46/24, F01N 3/023, F01N 3/05

(54) **PROCESS FOR PURIFYING EXHAUST GASES AND APPARATUS FOR PURIFYING EXHAUST GASES**
VERFAHREN ZUR REINIGUNG VON ABGASEN UND VORRICHTUNG ZUR REINIGUNG VON ABGASEN
PROCEDE DE PURIFICATION DE GAZ D'ECHAPPEMENT ET DISPOSITIF CORRESPONDANT

(30) Priority: 26.04.2005 JP 2005128443
(43) Date of publication of application: 16.01.2008
(73) Proprietor: TOYOTA JIDOSHA KABUSHIKI KAISHA, Toyota-shi, Aichi-ken, 471-8571 (JP)
(72) Inventor: SUZUKI, Juji, c/o Toyota Jidosha Kabushiki Kaisha, Toyota-shi, Aichi 471-8571 (JP); YAMAZAKI, Kiyoshi, c/o Kabushiki Kaisha Toyota Chuo Kenkyusho, Nagakute-cho, Aichi-gun, Aichi 480-1192 (JP); SAKAKIBARA, Yuji, c/o Kabushiki Kaisha Toyota Chuo Kenkyusho, Nagakute-cho, Aichi-gun, Aichi 480-1192 (JP)
(74) Representative: Smith, Samuel Leonard
(86) International application number: PCT/JP2006/307802
(87) International publication number: WO 2006/117993

(56) References cited:
- EP-A- 1 405 663
- DE-A1- 2 233 963
- US-A- 5 065 574
- US-A- 5 253 476
- US-A- 5 549 725
- US-B1- 6 314 722
- PATENT ABSTRACTS OF JAPAN vol. 006, no. 098 (C-106), 8 June 1982 (1982-06-08) & JP 57 030524 A (TSUCHIYA MFG CO LTD), 18 February 1982 (1982-02-18)

## Description

### TECHNICAL FIELD

The present invention relates to a process for purifying exhaust gases, which include particulate matters (hereinafter abbreviated to as "PMs"), and an exhaust-gas purifying apparatus utilizing the exhaust-gas purifying process.

### BACKGROUND ART

Regarding gasoline engines, harmful components in the exhaust gases have been reduced securely by the strict regulations on the exhaust gases and the technological developments capable of coping with the strict regulations. On the other hand, regarding diesel engines, it is more difficult to purify the exhaust gases than it is to purify the exhaust gases emitted from gasoline engines, because there have been the unique circumstances that diesel engines emit particulates (or PMs, such as carbonaceous fine particles, sulfuric fine particles like sulfates, and high-molecular weight hydrocarbon fine particles (hereinafter referred to as "SOFs")).

As exhaust-gas purifying apparatuses having been developed so far for diesel engines, the following have been known. For example, the exhaust-gas purifying apparatuses can be roughly divided into trapping (or wall-flow) exhaust-gas purifying apparatuses and open (or straight-flow) exhaust-gas purifying apparatuses. Among these, plugged honeycomb structures made from ceramic (i.e., diesel PMs filters, hereinafter referred to as "DPFs") have been known as one of the trapping exhaust-gas purifying apparatuses. In the DPFs, the honeycomb structures are plugged at the opposite openings of cells in a checkered manner alternately, for instance. The DPFs comprise inlet cells plugged on the downstream side of the flow of exhaust gases, outlet cells neighboring the inlet ells and plugged on the upstream side of the flow of exhaust gases, and cellular walls demarcating the inlet cells and the outlet cells. In the DPFs, the exhaust gases are filtered by the pores of the cellular walls to collect PMs, thereby inhibiting PMs from being emitted.

In the DPFs, however, the pressure loss increases as PMs deposit thereon. Accordingly, it is needed to regularly remove deposited PMs to recover the DPFs by certain means. Hence, when the pressure loss increases, deposited PMs have been burned by flowing high-temperature exhaust gases through the DPFs conventionally, thereby recovering the DPFs. However, in this case, the greater the deposition of PMs is, the higher the temperature increases in burning deposited PMs. Consequently, there might arise cases that the DPFs have been damaged by welding or thermal stress resulting from such burning.

Hence, Japanese Unexamined Patent Publication (KOKAI) No. 2002-129,936 proposes a process in which ozone is added into an exhaust manifold of a diesel engine in order to remove PMs with ozone by means of oxidation. Since ozone is highly reactive, it is a good oxidizing agent. However, ozone has decomposed thermally at a temperature of 300 °C or more. Accordingly, ozone effects the advantage remarkably less in high-temperature exhaust gases. Moreover, even ozone is used in low-temperature exhaust gases, ozone has been consumed to oxidize NO, HC and CO contained in the exhaust gases. Consequently, the amount of ozone, which can be used in oxidizing PMs, has been reduced sharply.

Moreover, as disclosed in Japanese Examined Patent Publication (KOKOKU) No. 7-106,290, an exhaust-gas purifying filter catalyst has been developed recently. The exhaust-gas purifying filter catalyst comprises a coating layer made of alumina and formed on the surfaces of cellular walls in a DPF, and a catalytic ingredient, such as platinum (Pt), loaded on the coating layer. Since the exhaust-gas purifying filter catalyst oxidizes and burns collected PMs by means of the catalytic reactions of the loaded catalytic ingredient, it is possible to regenerate the DPF by burning PMs simultaneously with or successively after collecting PMs. Moreover, since the catalytic reactions occur at relatively low temperatures, and since PMs can be burned when they are collected less, the exhaust-gas purifying filter catalyst produces an advantage that the thermal stress acting onto the DPF is so less that the DPF are inhibited from being damaged.

In addition, Japanese Unexamined Patent Publication (KOKAI) No. 9-94,434 discloses an exhaust-gas purifying filter catalyst in which a coating layer with a catalytic ingredient loaded is formed not only on the cellular walls in a DPF but also in the pores of the cellular walls. When the catalytic ingredient is thus loaded in the pores of the cellular walls, the contacting probability between PMs and the catalytic ingredient is enhanced so that it is possible to burn PMs collected within the pores by means of oxidation. Moreover, the patent publication discloses to further load an NOₓ-sorbing member, which is selected from the group consisting of alkali metals and alkaline-earth metals, on the coating layer. If such is the case, the exhaust-gas purifying filter catalyst not only exhibits enhanced NOₓ purifying performance, but also can furthermore facilitate the oxidation of PMs by NOx, which are sorbed in the NOx-sorbing member. Note that the NOx-sorbing member turns into nitrate salts or nitrite salts to sorb NOx, and the resulting nitrate salts or nitrite salts of the NOx-sorbing member are **characterized in that** they exhibit relatively low melting points so that they melt and can thereby capture PMs at exhaust-gas temperatures. Accordingly, PMs, which are captured by the nitrate salts or nitrite salts of the NOx-sorbing member, are likely to contact with NO2, which is present very closely to them, with high probability. Consequently, the exhaust-gas purifying filter catalyst effects another benefit that it purifies PMs efficiently by means of oxidation.

However, when low-temperature exhaust gases flow into the above-described conventional filter catalysts, there might arise the case PMs have deposited onto the DPFs to increase the exhaust-gas pressure loss. In order to avoid this, it is possible to think of supplying an oxidizing agent, such as ozone, to the conventional filter catalysts in order to inhibit the exhaust-gas pressure loss, which results from the deposition of PMs, from increasing. However, the catalytic ingredient, or the metallic oxide used as the support for the catalytic ingredient might decompose ozone. Therefore, in the conventional filter catalysts, it has been difficult to remove PMs by means of oxidation with ozone.
DE-A1-22 33 963 discloses a method for purifying exhaust gases of internal combustion engines by means of a catalytic filter.
US-A-5,549,725 discloses an apparatus according to the pre-characterising section of claims 1 and 6.
US-B1-6,314,722 discloses a converter for purifying exhaust gases from lean-burn engines, in particular for controlling the amount of NOₓ and soot from a diesel engine in transient operation such as a vehicle. The converter contains a catalyst bed with a catalyst effective for NOₓ reduction with a chemical reductant. A reductant delivery system adds chemical reductant to the exhaust gases in an appropriate amount so that the ratio between the molar amount of chemical reductant and _{Nox} is above the certain minimum ratio when the exhaust gases pass over the catalyst bed. A soot trap may be provided in series with the catalyst bed in the converter, said reverse flowing of the exhaust gases through converter heating and continuously maintaining the soot trap at or above the ignition temperature of the soot.
EP-A-1 405 663 discloses a gas purifying system for purifying an object gas including a gas flow line through which the object gas to be purified flows from an object has generation mechanism, a discharge reaction device provided on a way of the gas flow line, a filter member disposed in the discharge reaction device having a structure capable of trapping particular matter contained in the object gas during a time when the object gas passes through the filter member; and a discharge generation device operatively connected to the discharge reaction device for causing electric field inside the discharge reaction device and generating discharge plasma therein.
US-A-5,065,574 discloses a subject trap regeneration apparatus including an electrical heating element and a reverse flow device for each of a plurality of relatively smaller trap cores arranged in a housing, with each reverse flow device constructed for directing a source of air at a controlled rate toward the normal second end of the trap core to the first end, and to controllably burn out particulate matter while the remaining trap cores are functioning to filter the exhaust gases in the normal flow direction.
US-A-5,253,476 discloses fine particles, e.g. carbon particles, present in exhaust gas being arrested by a heat-resistant filter packed with steel wool. When the filter is clogged to a given extent, ozone is jetted from a supplier so as to contact it with fine particles, whereupon the fine particles take fire and are burned because the filter is heated by waste heat.

### DISCLOSURE OF THE INVENTION

The present invention has been developed in view of the aforementioned circumstances. It is therefore an object of the present invention to remove PMs efficiently by means of oxidation, using an oxidizing agent, such as ozone.

According to the present invention, there is provided a process for purifying exhaust gases, the process comprising the steps of:
collecting particulate matters (hereinafter abbreviated to as "PMs") in exhaust gases with a filter in a main flow passage;
switching with a switching valve the flow of exhaust gases from the main flow passage to a bypass flow passage;
forcibly exhausting PMs, which are collected on the filter, by blowing a pressurized gas onto the filter from an exhaust-gas-flow downstream side with respect to the filter to an exhaust-gas-flow upstream side with respect thereto, thereby forming PMs-containing gases; and
supplying the formed PMs-containing gas to an auxiliary flow passage disposed on an exhaust-gas-flow upstream side with respect to the filter, branched from the main flow passage to extend away therefrom, equipped with a sub-filter for filtering PMs, thereby collecting PMs on the sub-filter, the PMs-containing gas being enabled to distribute through the auxiliary flow passage when the pressurised gas is being blown;
and characterised by:
supplying an oxidizing agent in the auxiliary flow passage; and
purifying PMs, which are contained in the PMs-containing gases, by contacting the oxidizing agent with the PMs-containing gases, thereby removing the PMs from the PMs-containing gases by means of oxidation.

In the present process, the exhaust gases can preferably have a predetermined temperature, and the pressurized gas can preferably have a temperature lower than the predetermined temperature of the exhaust gases; and the oxidizing agent can preferably comprise ozone. Note that the temperature of the pressurized gas can preferably be within a range of from room temperature to 300 °C, further preferably from room temperature to 200 °C. Moreover, the step of forcibly exhausting PMs can preferably comprise the steps of: supplying pressurized air from an exhaust-gas-flow downstream side with respect to the filter to an exhaust-gas-flow upstream side with respect thereto; supplying the formed PMs-containing gas to a sub-filter, thereby collecting PMs on the sub-filter; and supplying the oxidizing agent toward the sub-filter.

According to another aspect of the present invention, there is provided an apparatus for purifying exhaust gases, the apparatus comprising:
a main flow passage equipped with a filter (for collecting PMs;
a back-flowing device for supplying a pressurized gas from an exhaust-gas-flow downstream side with respect to the filter to an exhaust-gas-flow upstream side with respect thereto, and blowing out PMs, which are collected on the filter, onto an exhaust-gas-flow upstream side with respect to the filter as PMs-containing gases;
an auxiliary flow passage disposed on an exhaust-gas-flow upstream side with respect to the filter, branched from the main flow passage to extend away therefrom, equipped with a sub-filter for filtering PMs, and enabling the PMs-containing gas to distribute therethrough when the back-flowing apparatus is actuated;
means for supplying an oxidizing agent to the auxiliary flow passage, the oxidizing-agent supplying means disposed on an exhaust-gas-flow upstream side with respect to the sub-filter;
a bypass flow passage disposed on an exhaust-gas-flow upstream side with respect to the filter, branched from the main flow passage to extend away therefrom, and enabling exhaust gases to distribute therethrough when the back-flowing device is actuated; and
a switching valve for switching the flow of exhaust gases from the main flow passage to the bypass flow passage, or vice versa;
when the back-flowing device is actuated, the switching valve further leading the exhaust gases from the main flow passage to the bypass flow passage; PMs, which are contained in the PMs-containing gases blown out onto the exhaust-gas-flow upstream side with respect to the filter, flowing in the auxiliary passage to be collected onto the sub-filter;
**characterised in that**:
the oxidising-agent supplying means is disposed in the auxiliary flow passage, and
the oxidizing agent, which is supplied from the oxidizing-agent supplying means, removes the PMs, which are collected on the sub-filter, by means of oxidation.

The present apparatus can preferably further comprise a second filter and a second back-flowing device, which are disposed in the bypass flow passage and which operate in the same manner as the filter and the back-flowing device. In this instance, the present apparatus can preferably further comprise an opening-and-closing valve for opening and closing the auxiliary flow passage, the opening-and-closing valve disposed on an exhaust-gas-flow downstream side with respect to the auxiliary passage, wherein the exhaust gases flow in both of the main flow passage and the bypass passage when the opening-and-closing valve closes the auxiliary flow passage.

Moreover, in the present apparatus, the filter can preferably comprise a catalytic coating layer.

In accordance with the present process and present apparatus, it is possible to make the temperature of the PMs-containing gases lower than that of the exhaust gases with ease. Accordingly, the oxidizing agent is inhibited from decomposing thermally. Moreover, the PMs-containing gases little contain components, which are subjected to oxidation, except for PMs. Consequently, the oxidizing agent can remove PMs efficiently by means of oxidation. Thus, not only it is possible to recover the filter readily without damaging it by thermal stress, but also it is possible to inhibit the exhaust-gas pressure loss from increasing.

Moreover, when the filter comprises a catalytic coating layer, the catalytic coating layer can purify HC, CO and NOₓ in the exhaust gases efficiently. In addition, there occurs no such a drawback that a catalytic ingredient decomposes the oxidizing agent, because the oxidizing agent hardly contacts with the catalytic coating layer. As a result, it is possible to consume the oxidizing agent for removing PMs by means of oxidation efficiently.

### BRIER DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is an explanatory diagram for illustrating an exhaust-gas purifying apparatus according to Example No. 1 of the present invention, which is performing a process of collecting PMs.

Fig. 2 is a cross-sectional diagram for illustrating a filter catalyst, which is used in the exhaust-gas purifying apparatus according to Example No. 1 of the present invention.

Fig. 3 is an explanatory diagram for illustrating the exhaust-gas purifying apparatus according to Example No. 1 of the present invention, which is performing a process of forcibly exhausting PMs as well as a process of purifying PMs.

Fig. 4 is an explanatory diagram for illustrating an exhaust-gas purifying apparatus according to Example No. 2 of the present invention, which is performing a process of collecting PMs.

Fig. 5 is an explanatory diagram for illustrating the exhaust-gas purifying apparatus according to Example No. 2 of the present invention, which is performing a process of forcibly exhausting PMs as well as a process of purifying PMs.

Fig. 6 is an explanatory diagram for illustrating the exhaust-gas purifying apparatus according to Example No. 2 of the present invention, which is performing a process of forcibly exhausting PMs additionally as well as a process of purifying PMs addtionally.

Fig. 7 is an explanatory diagram for illustrating an exhaust-gas purifying apparatus according to Comparative Example No. 1.

### BEST MODE FOR CARRYING OUT THE INVENTION

Having generally described the present invention, a further understanding can be obtained by reference to the specific preferred embodiments which are provided herein for the purpose of illustration only and not intended to limit the scope of the appended claims.

In accordance with the present exhaust-gas purifying process, PMs are first collected with a filter in the step of collecting PMs. As for the exhaust gases, it is possible to exemplify exhaust gas including PMs, such as exhaust gases emitted from diesel engines.

The filter collects PMs by means of filtering action by letting only gaseous components in the exhaust gases pass therethrough. For example, the filter can be formed of metallic foam or heat-resistant nonwoven cloth. Alternatively, the filter can be produced out of heat-resistant ceramic, such as cordierite and silicon carbide. As one of such filters, a wall-flow structure DPF has been known. A wall-flow structure DPF comprises: inlet cells plugged on the exhaust-gas-flow downstream side; outlet cells neighboring the inlet cells, and plugged on the exhaust-gas-flow upstream side; and porous cellular walls demarcating the inlet cells and outlet cells, and having a large number of pores. When using such a wall-flow structure DPF as the filter, the exhaust gases, which flow into the inlet cells, pass through the porous cellular walls, and are exhausted through the outlet cells. In this instance, therefore, PMs are collected onto the pores of the porous cellular walls.

In the step of forcibly exhausting PMs, PMs, which are collected on the filter, are forcibly exhausted to recover the filter by blowing a pressurized gas onto the filter, and at the same time to form PMs-containing gases. As for the pressurized gas, it is possible to use a nitrogen gas. However, it is preferable to use pressurized air, because pressurized air is less expensive and can be handled with ease. The pressurized gas can be supplied through an inlet-end surface of the filter, or can be supplied through an outlet-end surface of the filter. When a DPF is used and the pressurized gas is supplied through an inlet-end surface of the DPF, PMs might be further pushed into the pores of the porous cellular walls of the DPF. Therefore, it is preferable to supply the pressurized gas so as to flow into the DPF through the outlet-end surface and flow out therefrom through the inlet-end surface in order to upgrade the emission rate of collected PMs. Moreover, the pressurized gas can preferably be supplied for a time period of from 1 to 20 minutes, further preferably from 2 to 10 minutes.

In the step of purifying PMs, PMs are removed by means of oxidation by contacting an oxidizing agent with the PMs-containing gases. As for the oxidizing agent, it is possible to exemplify NO₂ or active oxygen species. The "active oxygen species" refer to chemical species, such as O* radical, OH* radical, O* ion and ozone, which exhibit oxidizing activity. Among them, ozone is an especially preferable option, because it shows good ability of oxidizing PMs in low-temperature regions. Note that it is possible to decrease the temperature of the PMs-containing gases to lower temperatures more readily than to decrease the temperature of the exhaust gases. Thus, it is possible to inhibit ozone from decomposing thermally. Note that the oxidizing agent can preferably be supplied at a flow rate of from 1 to 30 g/min., further preferably from 2 to 30 g/min., for a time period of from 1 to 20 minutes, further preferably from 2 to 20 minutes.

When contacting the oxidizing agent with the PMs-containing gases, the oxidizing agent can be simply supplied into the flowing PMs-containing gases. However, in order to enhance the contactability between the oxidizing agent and the PMs, it is preferable to dispose a sub-filter in a flow passage of the PMs-containing gases. As for the sub-filter, it is possible to use the same filter as those described above. Note that the oxidizing agent can be supplied from a cylinder in which the oxidizing agent is compressed and accommodated. Moreover, ozone can be supplied by means of discharging the ambient atmosphere.

The present exhaust-gas purifying apparatus, which can carry out the present exhaust-gas purifying process, comprises a main flow passage, a back-flowing device, an auxiliary flow passage, means for supplying an oxidizing agent, a bypass flow passage, and a switching valve. The main flow passage is equipped with one of the aforementioned filters. The back-flowing device supplies a pressurized gas from an exhaust-gas-flow downstream side with respect to the filter to an exhaust-gas-flow upstream side with respect thereto, and blows out PMs, which are collected on the filter, onto an exhaust-gas-flow upstream side with respect to the filter as PMs-containing gases. The auxiliary flow passage is disposed on an exhaust-gas-flow upstream side with respect to the filter, is branched from the main flow passage to extend away therefrom, is equipped with a sub-filter for filtering PMs, and enables the PMs-containing gas to distribute therethrough when the back-flowing apparatus is actuated. The oxidizing-agent supplying means supplies one of the aforementioned oxidizing agents to the auxiliary flow passage, and is disposed on an exhaust-gas-flow upstream side with respect to the sub-filter. The bypass flow passage is disposed on an exhaust-gas-flow upstream side with respect to the filter, is branched from the main flow passage to extend away therefrom, and enables exhaust gases to distribute therethrough when the back-flowing device is actuated. The switching valve switches the flow of exhaust gases from the main flow passage to the bypass flow passage, or vice versa.

In the present exhaust-gas purifying apparatus, exhaust gases are first flowed in the main flow passage to collect PMs onto the filter. When the deposition amount of PMs increases in the filter to raise the exhaust-gas pressure loss, it becomes necessary to recover the filter. If such is the case, the switching valve switches the exhaust-gas flow passage from the main flow passage to the bypass flow passage. Therefore, the present apparatus can inhibit the exhaust-gas pressure loss from increasing.

Moreover, when the exhaust gases flow in the bypass flow passage, the back-flowing device is actuated to supply a pressurized gas from an exhaust-gas-flow downstream side with respect to the filter to an exhaust-gas-flow upstream side with respect to it. Accordingly, PMs, which are collected on the filter, are blown out as PMs-containing gases toward an exhaust-gas-flow upstream side with respect to the filter. The PMs-containing gases flow in the auxiliary flow passage so that PMs are collected on the sub-filter. In this instance, note that the oxidizing-agent supplying means, which is disposed on an exhaust-gas-flow upstream side with respect to the sub-filter, is actuated to supply an oxidizing agent to the PMs-containing gases, which flow in the auxiliary flow passage. The oxidizing agent removes PMs, which are contained in the PMs-containing gases, by means of oxidation. In addition, the oxidizing agent removes PMs, which are collected on the sub-filter, by means of oxidation when it passes through the sub-filter.

The oxidizing-agent supplying means supplies the oxidizing agent to the auxiliary flow passage on an exhaust-gas-flow upstream side with respect to the sub-filter. For example, the oxidizing agent can be supplied to the auxiliary flow passage in the following manner: the oxidizing agent is supplied into the PMs-containing gases from a cylinder, in which one of the active oxygen species is filled, by way of a valve. Alternatively, the oxidizing agent can be supplied into the PMs-containing gases using an ozone generator, which utilizes electric discharging. Moreover, the oxidizing agent can be supplied into the PMs-containing gases by supplying ozone, which is generated by causing electric discharge in air or exhaust gases, to the auxiliary flow passage with such means as a pump.

Even when the exhaust gases flow in the bypass flow passage, it is preferable that PMs are being removed. Accordingly, it is desirable that a second filter can be further disposed in the bypass flow passage. Moreover, it is necessary as well to recover such a second filter disposed in the bypass flow passage when PMs deposit on the second filter. Consequently, the bypass flow passage can preferably be arranged in the same manner as the main flow passage, that is, the bypass flow passage can preferably further comprise a second back-flowing device for supplying a pressurized gas from an exhaust-gas-flow downstream side with respect to the second filter to an exhaust-gas-flow upstream side with respect thereto, and blowing out PMs, which are collected on the second filter, onto an exhaust-gas-flow upstream side with respect to the second filter as PMs-containing gases. In this instance, note that the present exhaust-gas purifying apparatus operates so as to flow the exhaust gases in the main flow passage when the second back-flowing device supplies a pressurized gas to the second filter in the bypass flow passage.

Note that the present exhaust-gas purifying apparatus can comprise a single bypass flow passage, or a plurality of bypass flow passages. When the present exhaust-gas purifying apparatus comprises a plurality of bypass flow passages, the bypass flow passages can preferably be equipped with a filter, which makes it possible to collect PMs, and a back-flowing device, which makes it possible to recover the filter, respectively, in the same manner as the main flow passage.

The filter can preferably be a filter catalyst comprising a catalytic coating layer. When the filter catalyst comprises a catalytic coating layer, it is possible to purify gaseous harmful components other than PMs. For example, when the filter catalyst oxidizes NO in the exhaust gases, NO₂ and nitrite ion or nitrate ion which exhibit high oxidizing activity, are generated. Accordingly, the present exhaust-gas purifying apparatus exhibits furthermore upgraded PMs-purifying performance. Moreover, since the oxidizing agent does not pass through the filter, there arises no such a drawback that the oxidizing agent has been decomposed by a catalytic ingredient loaded on the catalytic coating layer. Taking the fact into consideration, the sub-filter can preferably be free of a catalytic coating layer formed therein.

The catalytic coating layer of the filter catalyst comprises a support, and a catalytic ingredient loaded on the support, for instance. The support can be composed of a porous oxide, such as alumina, titania, zirconia, ceria and silica. Alternatively, the support can be composed of a composite oxide, which is made of a plurality of the porous oxides. Moreover, the catalytic ingredient can be those which exhibit oxidizing activity. As for the catalytic ingredient, it is possible to use noble metals, such as Pt, Rh, Pd and Ir, or transition metals other than noble metals, such as Fe, Co, Ni and W. In addition, the catalytic coating layer can preferably further comprise an NOₓ-sorbing member loaded on the support. The NOₓ-sorbing member can be composed of at least one member selected from the group consisting of alkali metals and alkaline-earth metals. When the exhaust gases pass through the filter catalyst, an NOₓ-sorbing member, which is further loaded on the support of the catalytic coating layer, sorbs NOₓ in the form of nitrate ion or nitrite ion therein. Since the thus sorbed nitrate ion or nitrite ion acts as a strong oxidizing agent, the present exhaust-gas purifying apparatus exhibits furthermore upgraded PMs-purifying performance.

Moreover, the catalytic coating layer can preferably comprise a catalytic ingredient in a loading amount of from 0.1 to 20 g with respect to 1-L volume of the filter. When the loading amount of a catalytic ingredient is less than the lower limit of the range, the activity of the loaded catalytic ingredient has been too low to be practical. When the loading amount of a catalytic ingredient is more than the upper limit of the range, the loaded catalytic ingredient has shown saturated activity, and at the same time the cost of resulting catalytic coating layer has gone up. In addition, the catalytic coating layer can preferably further comprise an NOₓ-sorbing member in a loading amount of from 0.05 to 1.5 mol with respect to 1-L volume of the filter. When the loading amount of an NOₓ-sorbing member is less than the lower limit of the range, the loaded NOₓ-sorbing member has shown such low activity that the loading is meaningless. When the loading amount of an NOₓ-sorbing member is more than the upper limit of the range, the loaded NOₓ-sorbing member is likely to cover the loaded catalytic ingredient so as to degrade the activity of the loaded catalytic ingredient.

### EXAMPLES

The present invention will be hereinafter described in detail with reference to examples and comparative examples.

### (Example No. 1)

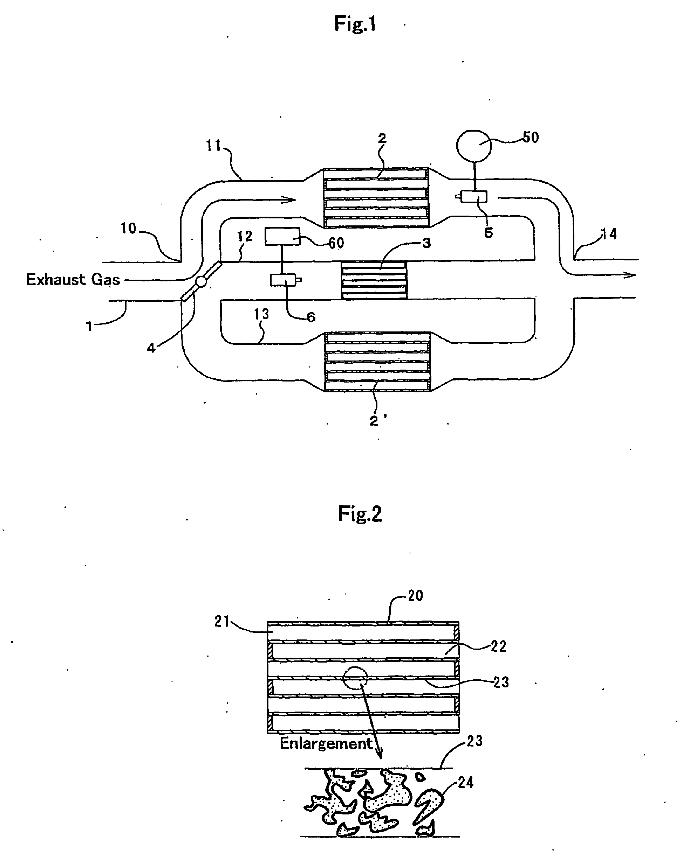

Fig. 1 illustrates an exhaust-gas purifying apparatus according to Example No. 1 of the present invention. For example, the exhaust-gas purifying apparatus is disposed between the exhaust manifold and exhaust muffler of a diesel engine to use.

As illustrated in Fig. 1, the exhaust-gas purifying apparatus according to Example No. 1 comprises an exhaust pipe 1. The exhaust pipe 1 comprises an inlet-side fork 10, a main flow passage 11, an auxiliary flow passage 12, a bypass flow passage 13, and an outlet-side fork 14. The main flow passage 11, auxiliary flow passage 12 and bypass flow passage 13 are branched away from the exhaust pipe 1 at the inlet-side fork 10, and are disposed parallelly to each other. Moreover, the main flow passage 11, auxiliary flow passage 12 and bypass flow passage 13 join the exhaust pipe 1 at the outlet-side fork 14, respectively. In addition, the main flow passage 11 comprises a filter catalyst 2 disposed therein. The bypass flow passage 13 comprises a second filter catalyst 2' disposed therein. Meanwhile, the auxiliary flow passage 12 comprises a DPF disposed therein.

As illustrated in Fig. 2, the filter catalyst 2 and second filter catalyst 2' are formed of a wall-flow structure DPF 20, respectively. The wall-flow structure DPF 20 comprises inlet cells 21, outlet cells 22, and porous cellular walls 23. The inlet cells 21 are plugged at the exhaust-gas-flow downstream opposite end of the DPF 20. The outlet cells 22 are disposed adjacently to the inlet cells 21, any are plugged at the exhaust-gas-flow upstream opposite end of the DPF 20. The cellular walls 23 demarcate the inlet cells 21 and outlet cells 22, and have a large number of pores. The filter catalyst 2 and second filter catalyst 2' further comprise a catalytic coating layer 24, respectively. The catalytic coating layer 24 is formed on the surface of the cellular walls 23 as well as on the surface of the pores in the cellular walls 23. Hereinafter, the production process of the filter catalyst 2 and second filter catalyst 2' will be described instead of describing their arrangements in detail.

First of all, a DPF made of cordierite was prepared. The DPF exhibited pore volumes of from 0.58 to 0.65 mL/g, pore diameters of from 25 to 35 µm, and a volume of 1.5 L. Meanwhile, a slurry was prepared. The prepared slurry was composed of a γ-alumina powder in an amount of 70 parts by weight, a titania-zirconia solid solution powder in an amount of 70 parts by weight, and a ceria powder in an amount of 12 parts by weight. Note that the y -alumina powder, the titania-zirconia solid solution powder and the ceria powder exhibited a specific surface area of 220 m²/g, 100 m²/g and 120 m²/g, respectively. Moreover, the viscosity of the resulting slurry was controlled to 100 cps or less. After wash coating the slurry onto the DPF, the DPF was calcined at 500 °C for 3 hours to form a coating layer. Note that the coating layer was formed in an amount of 152 g with respect to 1-L volume of the DPF. Moreover, the pores in the cellular walls 23 had an average pore diameter of 25 µm or more securely. Then, Pt, Li, Ba and K were loaded on the resultant coating layer of the DPF by a water absorption loading method, respectively. Finally, the DPF was calcined at 300 °C for 3 hours to complete the catalytic coating layer 24. Note that Pt, Li, Ba and K were loaded in an amount of 1.5 g, 0.3 mol, 0. 05 mol and 0. 025 mol, respectively, with respect to 1-L volume of the DPF.

As for the DPF 3, the same DPF as the above-described DPF was used as it was substantially. That is, the specifications of the used DPF were as follows: the pore volumes were from 0.58 to 0.65 mL/g; the pore diameters were from 25 to 35 µm; but the volume was 1.0 L. Note that the used DPF was free from any coating layer or catalytic coating layer formed therein.

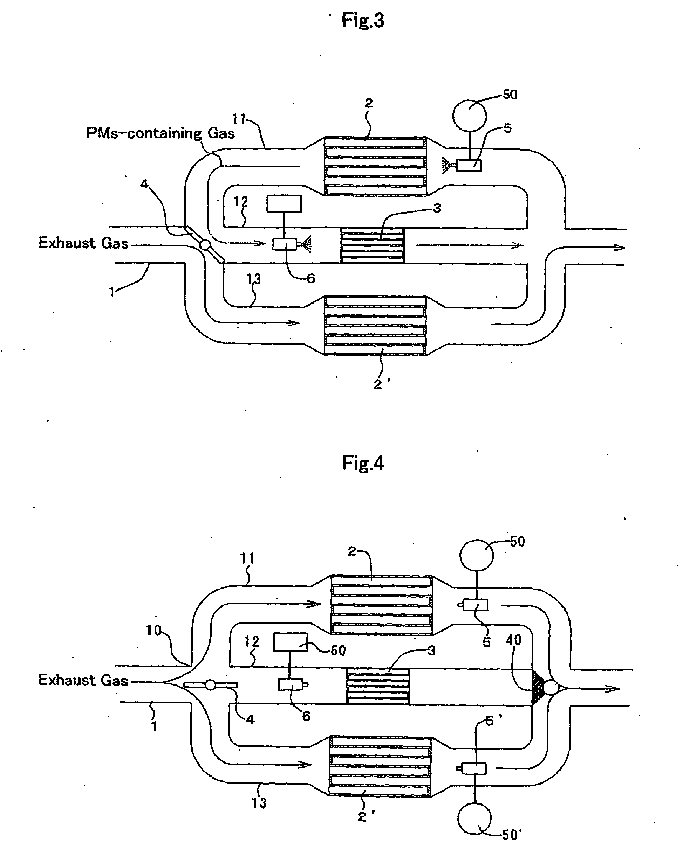

As illustrated in Fig. 1, the exhaust pipe 1 further comprises a switching valve 4, which is disposed at the inlet-side fork 10. The switching valve 4 switches the exhaust-gas flow passage between the main flow passage 11 and the bypass passage 13 selectively. As shown in the drawing, when the switching valve 4 closes the bypass passage 13, an exhaust gas distributes in the main flow passage 11 alone; and the auxiliary flow passage 12 communicates with the bypass flow passage 13 at the inlet-side fork 10. On the other hand, as illustrated in Fig. 3, when the switching valve 4 closes the main flow passage 11, an exhaust gas distributes in the bypass flow passage 13 alone; and the auxiliary flow passage 12 communicates with the main flow passage 11 at the inlet-side fork 10.

Moreover, the exhaust pipe 1 further comprises an air supply valve 5, which is disposed in the main flow passage 11. The air supply valve 5 is placed on an exhaust-gas-flow downstream side with respect to the filter catalyst 2. The air supply valve 5 blows out pressurized air, which a compressor 50 produces, toward the outlet opposite-end surface of the filter catalyst 2.

In addition, the exhaust pipe 1 further comprises an ozone supply valve 6, which is disposed in the auxiliary flow passage 12. The ozone supply valve 6 is placed on an exhaust-gas-flow upstream side with respect to the DPF 3. The ozone supply valve 6 blows out ozone, which an ozone generator 60 generates, toward the inlet opposite-end surface of the DPF 3.

The exhaust-gas purifying apparatus according to Example No. 1, which is arranged as described above, is used at first with the bypass flow passage 13 and auxiliary flow passage 12 closed by the switching valve 4 as shown in Fig. 1. Accordingly, an exhaust gas distributes in the main flow passage 11 alone. Consequently, PMs in the exhaust gas are collected onto the filter catalyst 2, and are then purified, following the collection onto the filter catalyst 2, by the Pt, which is loaded on the catalytic coating layer 24, by means of oxidation. On other hand, in regard to a fuel-lean atmosphere exhaust gas, HC and CO are purified by Pt by means of oxidation, and NOₓ are sorbed into the Li, Ba and K, the NOₓ-sorbing members loaded on the catalytic coating layer 24. When the fuel-lean atmosphere exhaust gas is turned into a fuel-rich atmosphere exhaust gas by supplying a fuel into the fuel-lean atmosphere exhaust gas intermittently, NOₓ, which have been sorbed in the NOₓ-sorbing members, are emitted from the catalytic coating layer 24, and are then purified by HC and CO, which are present abundantly in the fuel-rich atmosphere exhaust gas, by means of reduction.

Note herein that, when a low-temperature exhaust gas keeps flowing into the exhaust pipe 1 for a long period of time, or when the exhaust gas is kept in a reducing atmosphere for a prolonged period of time, the purification of PMs by means of oxidation, which is effected by the catalytic coating layer 24, might not keep up the flow of the exhaust gas. If such is the case, PMs deposit onto the cellular walls of the filter catalyst 2 so that there might arise a drawback that the exhaust-gas pressure loss has increased. In such an instance, the switching valve 4 is actuated so as to control the exhaust gas to flow in the bypass flow passage 13 alone as illustrated in Fig. 3. Thus, it is possible to avoid the rising of exhaust-gas pressure loss.

Moreover, the air supply valve 5 is actuated to blow pressurized air toward the exhaust-gas-flow downstream-end surface of the filter catalyst 2, that is, toward the outlet opposite-end surface thereof. The pressurized air passes through the outlet cells 22, the cellular walls 23 and the inlet cells 21 in this order, and is then blows out through the exhaust-gas-flow upstream-end surface of the filter catalyst 2, that is, through the inlet opposite-end surface thereof. In this instance, PMs, which have deposited on the cellular walls 23 of the filter catalyst 2, are blown out together with the pressurized air to form a PMs-containing gas. Thus, the filter catalyst 2 recovers the PMs-collecting capability.

Note that the PMs-containing gas, which flows out through the inlet opposite-end surface of the filter catalyst 2, flows into the auxiliary flow passage 12 as designated with the dotted arrow of Fig. 3. Afterward, the PMs-containing gas passes through the DPF 3, and is then emitted into the exhaust pipe 1 at the outlet-fork 14. When the PMs-containing gas passes through the DPF 3, PMs in the PMs-containing gas are collected onto the DPF 3. Moreover, at this moment, the ozone supply valve 6 is actuated as well. Accordingly, PMs, which are collected on the DPF3, are removed immediately by means of oxidation prior to their collection onto the DPF3, or simultaneously with the collection thereto, or after the collection thereon. In addition, since no other components, such as NO, HC and CO, which react with ozone, are contained in the PMs-containing gas, there occurs no such a drawback that these components have consumed the supplied ozone up. Moreover, since the PMs-containing gas has a lower temperature than that of the exhaust gas which flows into the exhaust pipe 1, it is possible to inhibit such a drawback that the ozone has been decomposed thermally from arising.

In addition, the supplied ozone exhibits remarkably high PMs-oxidizing activity, it can oxidize PMs readily even at low temperatures. Accordingly, the time period for supplying ozone can be shortened. Consequently, the time period for distributing the exhaust gas in the bypass passage 13 can be shortened as well. All in all, it is possible to carry out the above-described recycling process a large number of times before PMs deposit on the second filter catalyst 2', which is disposed in the bypass flow passage 13.

### (Example No. 2)

However, the exhaust-gas purifying apparatus according to Example No. 1 might suffer from the problem that PMs have deposited on the second filter catalyst 2', which is disposed in the bypass flow passage 13, eventually to raise the exhaust-gas pressure loss during the recycling of the DPF 3.

Therefore, an exhaust-gas purifying apparatus according to Example No. 2 of the present invention further comprise a second air supply valve 5' as illustrated in Fig. 4. As shown in the drawing, the second air supply valve 5' is disposed on an exhaust-gas-flow downstream side with respect to the second filter catalyst 2', which is disposed in the bypass passage 13. Hence, the exhaust-gas purifying apparatus according to Example No. 2 is arranged so that the second air supply valve 5' blows out pressurized air, which a second compressor 50' produces, toward the outlet opposite-end surface of the second filter catalyst 2'.

Moreover, the exhaust-gas purifying apparatus according to Example No. 2 further comprises a switching valve 4, which is arranged to take a neutral position. That is, at the neutral position, the switching valve 4 can open both of the main flow passage 11 and bypass flow passage 13. In addition, the exhaust-gas purifying apparatus according to Example No. 2 further comprises a three-way valve 40, which is disposed at the outlet-side fork 14 of the exhaust pipe 1. The three-way valve 40 can close one of the outlet openings of the main flow passage 11, auxiliary flow passages 12 and bypass flow passage 13 selectively

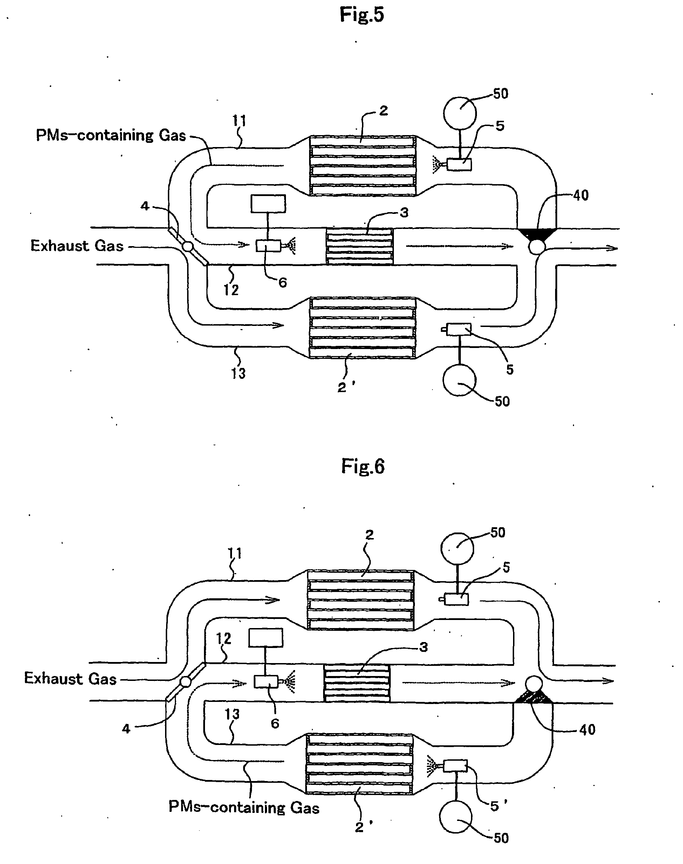

The thus arranged exhaust-gas purifying apparatus according to Example No. 2 is controlled so that it is put into three states; a state of collecting PMs onto the filter catalyst 2 in the main flow passage 11 and onto the second filter catalyst 2' in the bypass flow passage 13, as illustrated in Fig. 4; a state of recovering the filter catalyst 2 in the main flow passage 11, as illustrated in Fig. 5; and a state of recovering the second filter catalyst 2' in the bypass flow passage 13, as illustrated in Fig. 6.

As shown in Fig. 4, in the state of collecting PMs onto the filter catalyst 2 in the main flow passage 11 and onto the second filter catalyst 2' in the bypass flow passage 13, the switching valve 4 is put into the neutral position at which it opens both of the main flow passage 11 and bypass flow passage 13; and the three-way valve 40 closes the outlet opening of the auxiliary flow passage 12. Accordingly, an exhaust gas flows into both of the main flow passage 11 and bypass flow passage 13. Consequently, the filter catalyst 2 and second filter catalyst 2' collect PMs in the exhaust gas to purify the exhaust gas.

As shown in Fig. 5, in the state of recovering the filter catalyst 2 in the main flow passage 11, the switching valve 4 is actuated to close the main flow passage 11 and auxiliary flow passage 12. Accordingly, the exhaust gas flows in the bypass flow passage 13 alone. Moreover, the three-way valve 40 closes the outlet opening of the main flow passage 11. Then, the air supply valve 5 and ozone supply valve 6 are actuated. Consequently; the filter catalyst 2 recovers the PMs-collecting capability. At the same time, the supplied ozone removes PMs, which are collected on the DPF 3 in the auxiliary passage 12, by means of oxidation.

As shown in Fig. 6, in the state of recovering the second filter catalyst 2' in the bypass flow passage 13, the switching valve 4 is actuated to close the auxiliary flow passage 12 and the bypass flow passage 13. Accordingly, the exhaust gas flows in the main flow passage 11 alone. Moreover, the three-way valve 40 closes the outlet opening of the bypass flow passage 13. Then, the second air supply valve 5' and ozone supply valve 6 are actuated. Consequently, the second filter catalyst 2' recovers the PMs-collecting capability. At the same time, the supplied ozone removes PMs, which are collected on the DPF 3 in the auxiliary passage 12, by means of oxidation.

When the exhaust-gas purifying apparatus according to Example No. 2 is controlled in the three different modes as described above, pressure sensors, which are disposed in front of the filter catalyst 2 or the second filter catalyst 2' and at the rear thereof, make it possible to put the filter catalyst 2 or the second filter catalyst 2' into the recycle mode. That is, upon detecting the circumstances that the exhaust-gas pressure loss in the filter catalyst 2 or the second filter catalyst 2' is larger than a predetermined value with the pressure sensors, the exhaust-gas purifying apparatus according to Example No. 2 is operated in the recycling mode of the filter catalyst 2 or the second filter catalyst 2'. Moreover, it is possible to predict the generation amount of PMs from the torque and revolution speed of engine in order to operate the exhaust-gas purifying apparatus according to Example No. 2 in the recycling mode of the filter catalyst 2 or the second filter catalyst 2'. That is, upon detecting the circumstances that the predicted generation amount of PMs exceeds a predetermined threshold value, the filter catalyst 2 or the second filter catalyst 2'are recycled. Alternatively, upon detecting the circumstances that the travel distance of vehicle is more than a predetermined value, the filter catalyst 2 or the second filter catalyst 2' can be recycled simply.

The following experiment was carried out in order to investigate the advantages effected by the exhaust-gas purifying apparatus according to Example No. 2.

First of all, an exhaust manifold of a 2-L displacement direct-injection diesel engine was connected to the exhaust-gas-flow upstream end of the exhaust pipe 1 of the exhaust-gas purifying apparatus according to Example No. 2. Then, the revolution speed and output torque of the diesel engine were controlled so that the exhaust-gas temperature was either 250 °C or 350 °C at the inlet-side fork 10 of the exhaust pipe 1 in the exhaust-gas purifying apparatus according to Example No. 2. Thus, the exhaust-gas purifying apparatus according to Example No. 2 was operated under two operation conditions in order to evaluate the advantages. The generation amount of PMs, which were emitted from the thus running diesel engine, was 1.0 g/hr or 4.0 g/hr on hourly average.

Firstly, the exhaust-gas purifying apparatus according to Example No. 2 was operated in the mode of collecting PMs shown in Fig. 4 for a time period equivalent to running the diesel engine for 100 km. Subsequently, the exhaust-gas purifying apparatus according to Example No. 2 was operated in the mode of recycling the filter catalyst 2 shown in Fig. 5 for 5 minutes. In this instance, the air supply valve 5 supplied air in an amount of about 5 m³, and the ozone supply valve 6 supplied ozone in an amount of about 6 g. Thereafter, the exhaust-gas purifying apparatus according to Example No. 2 was further operated in the mode of collecting PMs shown in Fig. 4 for a time period equivalent to running the diesel engine for. 100 km. Then, the exhaust-gas purifying apparatus according to Example No. 2 was further operated in the mode of recycling the second filter catalyst 2' shown in Fig. 6 for 5 minutes. In this instance as well, the second air supply valve 5' supplied air in an amount of about 5 m³, and the ozone supply valve 6 supplied ozone in an amount of about 6 g.

A series of the above-described operations were repeated until the exhaust-gas purifying apparatus according to Example No. 2 was operate for a time period equivalent to running the diesel engine for 3,000 km. At this moment, the PMs conversion and exhaust-gas pressure loss of the exhaust-gas purifying apparatus according to Example No. 2 were measured. Table 1 below sets forth the results. Note that the PMs conversions were determined by finding a residual PMs deposition amount from the weight increments of the filter catalyst 2, second filter catalyst 2' and DPF 3 and calculating a ratio of the resulting residual PMs deposition amount with respect to the generation amount of PMs emitted from the diesel engine. Moreover, the exhaust-gas pressure loss was determined by constantly monitoring the exhaust-gas pressure within the entire exhaust-gas purifying apparatus according to Example No. 2 to measure the maximum exhaust-gas pressure loss thereof during the repetitive operations.

### (Comparative Example No. 1)

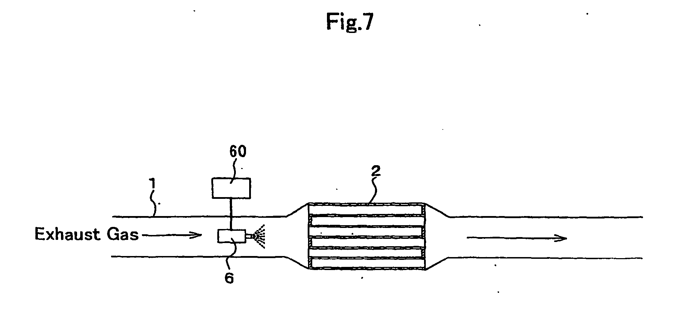

Fig. 7 illustrates an exhaust-gas purifying apparatus according to Comparative Example No. 1. As shown in the drawing, the exhaust-gas purifying apparatus according to Comparative Example No. 1 comprises an exhaust pipe 1, a filter catalyst 2, and an ozone supply valve 6. The filter catalyst 2 is arranged in the same manner as the filter catalyst 2 of the exhaust-gas purifying apparatus according to Example No. 1 except that it has a volume of 3 L. The ozone supply valve 6 is disposed in the exhaust pipe 1 on an exhaust-gas-flow upstream side with respect to the filter catalyst 2, and is connected to an ozone generator 60.

The thus constructed exhaust-gas purifying apparatus according to Comparative Example No. 1 was disposed in the exhaust system of a 2-L displacement direct-injection diesel engine in the same manner as Example No. 2. Using the exhaust-gas purifying apparatus according to Comparative Example No. 1, the exhaust gases emitted from the diesel engine were purified. Note that the exhaust-gas purifying apparatus according to Comparative Example No. 1 was operated so that the ozone supply valve 6 supplied ozone in an amount of about 6 g for about 5 minutes repetitively in every time period equivalent to running the diesel engine for 100 km. Then, the exhaust-gas purifying apparatus according to Comparative Example No. 1 was operated in this manner for a time period equivalent to running the diesel engine for 3,000 km. At this moment, the PMs conversion and exhaust-gas pressure loss of the exhaust-gas purifying apparatus according to Comparative Example. No. 1 were measured. Table 1 below sets forth the results.

### (Comparative Example No. 2)

An exhaust-gas purifying apparatus according to Comparative Example No. 2 is arranged in the same manner as the exhaust-gas purifying apparatus according to Comparative Example No. 1 shown in Fig. 7 except that it comprises a fuel addition valve, which is connected to a compressed fuel addition device, instead of the ozone supply valve 6, which is connected to the ozone generator 60.

The thus constructed exhaust-gas purifying apparatus according to Comparative Example No. 2 was disposed in the exhaust system of a 2-L displacement direct-injection diesel engine in the same manner as Example No. 2. Using the exhaust-gas purifying apparatus according to Comparative Example No. 2, the exhaust gases emitted from the diesel engine were purified. Note that the exhaust-gas purifying apparatus according to Comparative Example No. 2 was operated so that the fuel addition valve added a fuel (e.g., light oil) in an amount, which was equivalent to about 5% mileage degradation ratio, for about 5 minutes repetitively in every time period equivalent to running the diesel engine for 100 km. Note that the fuel addition amount was equivalent to an amount of energy required for generating ozone in an amount of about 6 g. Then, the exhaust-gas purifying apparatus according to Comparative Example No. 2 was operated in this manner for a time period equivalent to running the diesel engine for 3,000 km. At this moment, the PMs conversion and exhaust-gas pressure loss of the exhaust-gas purifying apparatus according to Comparative Example No. 2 were measured. Table 1 below sets forth the results. Note that the fuel addition increased the catalyst bed temperature of the filter catalyst 2 in the exhaust-gas purifying apparatus according to Comparative Example No. 2 so that the oxidation of PMs was facilitated.

### (Evaluation)

**TABLE 1**

| | 250 °C Inset Exhaust Gas | | 350 °C Inlet Exhaust Gas | |
|---|---|---|---|---|
| | PMs Conversion (%) | Exhaust-gas Pressure Loss (kPa) | PMs Conversion (%) | Exhaust-gas Pressure Loss (kPa) |
| Ex. #2 | 77 | 7 | 92 | 5 |
| Comp. Ex. #1 | 68 | 15 | 49 | 20 |
| Comp. Ex. #2 | 25 | 32 | 59 | 18 |

It is apparent from Table 1 that, under both operating conditions that the temperature of the inlet exhaust gas was set at either 250 °C or 350 °C, the exhaust-gas purifying apparatus according to Example No. 2 exhibited the higher PMs conversions than the PMs conversions exhibited by the exhaust-gas purifying apparatuses according to Comparative Example Nos. 1 and 2; and showed the lower exhaust-gas pressure losses.

On the other hand, the exhaust-gas purifying apparatus according to Comparative Example No. 1 exhibited a relatively high PMs conversion when the temperature of the inlet exhaust gas was 250 °C, but it showed a degraded PMs conversion when the temperature of the inlet exhaust gas was 350°C. The disadvantage is believed to result from the fact that the thermal decomposition had consumed the added ozone when ozone was added into the exhaust gas whose inlet temperature was 350 °C, or that the added ozone had reacted with components in the exhaust gas. Moreover, when the temperature of the inlet exhaust gas was 250 °C, the exhaust-gas purifying apparatus according to Comparative Example No. 1 exhibited the lower PMs conversion than that exhibited by the exhaust-gas purifying apparatus according to Example No. 2. It is believed that the lower PMs conversion can be attributed to the decomposition of the added ozone by ceria included in the filter catalyst 2, or to the reaction of the added ozone with components in the exhaust gases.

Moreover, the exhaust-gas purifying apparatus according to Comparative Example No. 2 increased the catalyst bed temperature of the filter catalyst 2 to facilitate the oxidation of PMs by means of fuel addition. However, note that, although the exhaust-gas purifying apparatus according to Comparative Example No. 2 produced the PMs conversion to a certain extent when the temperature of the inlet exhaust gas was 350 °C, it exhibited the sharply degraded PMs conversion when the temperature of the inlet exhaust gas was 250 °C. It is believed that the fuel was less likely to be ignited so that the fuel addition did not contribute to raising the catalyst bed temperature of the filter catalyst 2 when the temperature of the inlet exhaust gas was 250 °C. In addition, as a result of the drawback, PMs had deposited on the filter catalyst 2 in such a large amount that they hindered the catalytic ingredients from acting effectively.

As described above, the exhaust-gas purifying apparatus according to Example No. 2 could inhibit the exhaust-gas pressure loss from increasing. Moreover, it could inhibit the degradation of the catalytic activities of the filter catalyst 2, which resulted from the deposition of PMs. In addition, it could have the added ozone effect the oxidation of PMs maximally.

### INDUSTRIAL APPLICABILITY

The present exhaust-gas purifying process, and the present exhaust-gas purifying apparatus using the same can be applied to the purification of exhaust gases emitted form internal combustion engines such as diesel engines, in particular to the purification of exhaust gases, which contain PMs. Moreover, they can purify PMs highly efficiently by means of oxidation, using an oxidizing agent such as ozone.

## Claims

1. A process for purifying exhaust gases, the process comprising the steps of:
collecting particulate matters (hereinafter abbreviated to as "PMs") in exhaust gases with a filter (2) in a main flow passage;
switching with a switching valve (4) the flow of exhaust gases from the main flow passage to a bypass flow passage;
forcibly exhausting PMs, which are collected on the filter, by blowing a pressurized gas onto the filter from an exhaust-gas-flow downstream side with respect to the filter to an exhaust-gas-flow upstream side with respect thereto, thereby forming PMs-containing gases; and
the switching valve further leading the formed PMs-containing gas to an auxiliary flow passage (12) disposed on an exhaust-gas-flow upstream side with respect to the filter, branched from the main flow passage to extend away therefrom, equipped with a sub-filter (3) for filtering PMs, thereby collecting PMs on the sub-filter, the PMs-containing gas being enabled to distribute through the auxiliary flow passage when the pressurised gas is being blown;
and **characterised by**:
supplying an oxidizing agent in the auxiliary flow passage; and
purifying PMs, which are contained in the PMs-containing gases, by contacting the oxidizing agent with the PMs-containing gases, thereby removing the PMs from the PMs-containing gases by means of oxidation.

2. The process set forth in claim 1, wherein:
the exhaust gases have a predetermined temperature, and the pressurized gas has a temperature lower than the predetermined temperature of the exhaust gases; and
the oxidizing agent comprises ozone.

3. The process set forth in claim 2, wherein the pressurized gas has a temperature falling within a range of from room temperature to 300 °C.

4. The process set forth in claim 1, wherein the pressurized gas is supplied for a time period of from 1 to 20 minutes.

5. The process set forth in claim 1, wherein the oxidizing agent is supplied at a flow fate of from 1 to 30 g/min. for a time period of from 1 to 20 minutes.

6. An apparatus for purifying exhaust gases, the apparatus comprising:
a main flow passage (11) equipped with a filter (2) for collecting PMs;
a back-flowing device (5, 50) for supplying a pressurized gas from an exhaust-gas-flow downstream side with respect to the filter to an exhaust-gas-flow upstream side with respect thereto, and blowing out PMs, which are collected on the filter, onto an exhaust-gas-flow upstream side with respect to the filter as PMs-containing gases;
an auxiliary flow passage (12) disposed on an exhaust-gas-flow upstream side with respect to the filter, branched from the main flow passage to extend away therefrom, equipped with a sub-filter (3) for filtering PMs, and enabling the PMs-containing gas to distribute therethrough when the back-flowing apparatus is actuated;
means for supplying an oxidizing agent (6) to the auxiliary flow passage, the oxidizing-agent supplying means disposed on an exhaust-gas-flow upstream side with respect to the sub-filter;
a bypass flow passage (13) disposed on an exhaust-gas-flow upstream side with respect to the filter, branched from the main flow passage to extend away therefrom, and enabling exhaust gases to distribute therethrough when the back-flowing device is actuated; and
a switching valve (4) for switching the flow of exhaust gases from the main flow passage to the bypass flow passage, or vice versa;
when the back-flowing device is actuated, the switching valve further leading the exhaust gases from the main flow passage to the bypass flow passage; PMs, which are contained in the PMs-containing gases blown out onto the exhaust-gas-flow upstream side with respect to the filter, flowing in the auxiliary passage to be collected onto the sub-filter;
**characterised in that**:
the oxidising-agent supplying means is disposed in the auxiliary flow passage, and
the oxidizing agent, which is supplied from the oxidizing-agent supplying means, removes the PMs, which are collected on the sub-filter, by means of oxidation.

7. The apparatus set forth in claim 6 further comprising a second filter (21) and a second back-flowing device, which are disposed in the bypass flow passage and which operate in the same manner as the filter and the back-flowing device.

8. The apparatus set forth in claim 7 further comprising an opening-and-closing valve (40) for opening and closing the auxiliary flow passage, the opening-and-closing valve disposed on an exhaust- gas-flow downstream side with respect to the auxiliary passage, wherein the exhaust gases flow in both of the main flow passage and the bypass passage when the opening-and-closing valve closes the auxiliary flow passage.

9. The apparatus set forth in claim 6, wherein the filter comprises a catalytic coating layer.

10. The apparatus set forth in claim 6, wherein the back-flowing device supplies a pressurized gas whose temperature falls within a range of from room temperature to 300 °C.

11. The apparatus set forth in claim 6, wherein the back-flowing device supplies the pressurized gas for a time period of from 1 to 20 minutes.

12. The apparatus set forth in claim 6, wherein the oxidizing-agent supplying means supplies the oxidizing agent at. a flow rate of from 1 to 30 g/min. for a time period of from 1 to 20 minutes.

## Patentansprüche

1. Verfahren zum Reinigen von Abgasen, wobei das Verfahren die folgenden Schritte umfasst:
Sammeln von partikelförmigem Material (im folgenden kurz "PM") in Abgasen mittels eines Filters (2) in einem Haupt-Strömungskanal;
Umschalten des Abgasstroms vom Haupt-Strömungskanal auf einen Umgehungs-Strömungskanal mittels eines Schaltventils (4);
zwangsweise Ausblasen von auf dem Filter gesammeltem PM durch Blasen eines unter Druck stehenden Gases auf den Filter von einer, in Abgasströmungsrichtung gesehen, in Bezug auf den Filter unteren Seite her, wodurch PM-haltige Gase gebildet werden; und
Leiten des gebildeten PM-haltigen Gases, ebenfalls mittels des Schaltventils, zu einem, in Abgasströmungsrichtung gesehen, oberhalb des Filters angeordneten Hilfs-Strömungskanal (12), der vom Haupt-Strömungskanal abzweigt und wegführt und der mit einem Nebenfilter (3) zum Filtern von PM ausgestattet ist, wodurch PM auf dem Nebenfilter gesammelt wird, wobei das PM-haltige Gas sich im Hilfs-Strömungskanal verteilen kann, wenn das unter Druck stehende Gas ausgeblasen wird;
und **gekennzeichnet ist durch**:
Liefern eines Oxidierungsmittels in den Hilfs-Strömungskanal; und
Entfernen von PM, das in den PM-haltigen Gasen enthalten ist, **durch** Inkontaktbringemdes Oxidierungsmittels mit den PM-haltigen Gasen, wodurch PM mittels Oxidation aus den PM-haltigen Gasen entfernt wird.

2. Verfahren nach Anspruch 1, wobei:
die Abgase eine vorgegebene Temperatur aufweisen, und das unter Druck stehende Gas eine Temperatur aufweist, die niedriger ist als die vorgegebene Temperatur der Abgase; und
wobei das Oxidierungsmittel Ozon umfasst.

3. Verfahren nach Anspruch 2, wobei das unter Druck stehende Gas eine Temperatur aufweist, die im Bereich von Raumtemperatur bis 300 °C liegt.

4. Verfahren nach Anspruch 1, wobei das unter Druck stehende Gas über einen Zeitraum von 1 bis 20 Minuten zugeführt wird.

5. Verfahren nach Anspruch 1, wobei das Oxidierungsmittel mit einer Strömungsrate von 1 bis 30 g/min über einen Zeitraum von 1 bis 20 Minuten zugeführt wird.

6. Vorrichtung für die Reinigung von Abgasen, wobei die Vorrichtung aufweist:
einen Haupt-Strömungskanal (11), der mit einem Filter (2) zum Sammeln von PM ausgestattet ist;
eine Stromumkehrungseinrichtung (5, 50) zum Liefern eines unter Druck stehenden Gases von einer, in Abgasströmungsrichtung gesehen, in Bezug auf den Filter unteren Seite zu einer, in Abgasströmungsrichtung gesehen, in Bezug auf den Filter oberen Seite, und zum Ausblasen von auf dem Filter gesammeltem PM in Form von PM-haltigen Gasen auf eine, in Abgasströmungsrichtung gesehen, in Bezug auf den Filter obere Seite;
einen, in Abgasströmungsrichtung gesehen, oberhalb des Filters angeordneten Hilfs-Strömungskanal (12), der vom Haupt-Strömungskanal abzweigt und wegführt, und der mit einem Nebenfilter (3) ausgestattet ist, um PM zu filtern, und der es ermöglicht, dass das PM-haltige Gas sich in ihm verteilt, wenn die Stromumkehrungseinrichtung betätigt wird;
Mittel zum Liefern eines Oxidierungsmittels (6) zum Hilfs-Strömungskanal, wobei das Oxidierungsmittel-Zufuhrmittel, in Abgasströmungsrichtung gesehen,
oberhalb des Nebenfilters angeordnet ist;
einen, in Abgasströmungsrichtung gesehen, oberhalb des Filters angeordneten Umgehungs-Strömungskanal (13), der vom Haupt-Strömungskanal abzweigt und
wegführt, und der es den Abgasen ermöglicht, sich in ihm zu verteilen, wenn die Stromumkehrungseinrichtung betätigt wird; und
ein Schaltventil (4) zum Umschalten des Abgasstroms vom Haupt-Strömungskanal auf den Umgehungs-Strömungskanal oder umgekehrt;
wobei, wenn die Stromumkehrungseinrichtung betätigt wird, das Schaltventil die Abgase ferner vom Haupt-Strömungskanal zum Umgehungs-Strömungskanal führt; in den PM-haltigen Gasen enthaltenes PM, das, in Abgasströmungsrichtung gesehen, zur Seite stromaufwärts vom Filter ausgeblasen wird, im Hilfskanal strömt, um auf dem Nebenfilter gesammelt zu werden;
**dadurch gekennzeichnet, dass:**
das Oxidierungsmittel-Zufuhrmittel im Hilfs-Strömungskanal angeordnet ist und
das Oxidierungsmittel, das vom Oxidierungsmittel-Zufuhrmittel geliefert wird, PM, das auf dem Nebenfilter gesammelt wurde, mittels Oxidation entfernt.

7. Vorrichtung nach Anspruch 6, ferner einen zweiten Filter (21) und eine zweite Stromumkehrungseinrichtung aufweisend, die im Umgehungs-Strömungskanal angeordnet sind, und die auf die gleiche Weise funktionieren, wie der Filter und die Stromumkehrungseinrichtung.

8. Vorrichtung nach Anspruch 7, ferner ein Auf/Zu-Ventil (40) zum Öffnen und Schließen des Hilfs-Strömungskanals aufweisend, wobei das Auf/Zu-Ventil, in Abgasströmungsrichtung gesehen, unterhalb des Hilfskanals angeordnet ist, wobei die Abgase sowohl im Haupt-Strömungskanal als auch im Umgehungs-Strömungskanal strömen, wenn das Auf/Zu-Ventil den Hilfs-Strömungskanal schließt.

9. Vorrichtung nach Anspruch 6, wobei der Filter eine katalytische Überzugsschicht aufweist.

10. Vorrichtung nach Anspruch 6, wobei die Stromumkehrungseinrichtung ein unter Druck stehendes Gas, dessen Temperatur in einem Bereich von Raumtemperatur bis 300 °C liegt, liefert.

11. Vorrichtung nach Anspruch 6, wobei die Stromumkehrungseinrichtung das unter Druck stehende Gas über einen Zeitraum von 1 bis 20 Minuten zuführt.

12. Vorrichtung nach Anspruch 6, wobei das Oxidierungsmittel-Zufuhrmittel das Oxidierungsmittel mit einer Strömungsrate von 1 bis 30 g/min über einen Zeitraum von 1 bis 20 Minuten zuführt.

## Revendications

1. Procédé d'épuration de gaz d'échappement, le procédé comprenant les étapes consistant à :
collecter des matières particulaires (ci-après abrégées en « MP ») dans des gaz d'échappement à l'aide d'un filtre (2) dans un passage d'écoulement principal ;
commuter avec une soupape de commutation (4) l'écoulement de gaz d'échappement du passage d'écoulement principal sur un passage d'écoulement de dérivation ;
forcer l'échappement de MP qui sont collectées sur le filtre, en soufflant un gaz sous pression sur le filtre depuis un côté aval d'écoulement de gaz d'échappement par rapport au filtre vers un côté amont d'écoulement de gaz d'échappement par rapport à celui-ci, de manière à former des gaz contenant des MP ; et
la soupape de commutation conduisant en outre le gaz formé contenant des MP vers un passage d'écoulement auxiliaire (12) disposé sur un côté amont d'écoulement de gaz d'échappement par rapport au filtre, placé en dérivation à partir du passage d'écoulement principal pour s'étendre à l'écart de celui-ci, équipé d'un filtre secondaire (3) destiné à filtrer des MP, de façon à collecter des MP sur le filtre secondaire, le gaz contenant des MP étant rendu apte à être distribué à travers le passage d'écoulement auxiliaire lorsque le gaz sous pression est soufflé ;
et **caractérisé par** :
le fait de délivrer un agent d'oxydation dans le passage d'écoulement auxiliaire ; et
le fait d'épurer des MP les gaz contenant des MP qui les contiennent, en mettant l'agent d'oxydation au contact des gaz contenant des MP, de manière à éliminer les MP des gaz contenant des MP par voie d'oxydation.

2. Procédé selon la revendication 1, dans lequel :
les gaz d'échappement ont une température prédéterminée, et le gaz sous pression a une température inférieure à la température prédéterminée des gaz d'échappement ; et
l'agent d'oxydation comprend de l'ozone.

3. Procédé selon la revendication 2, dans lequel le gaz sous pression a une température chutant à l'intérieur d'une plage allant de la température ambiante à 300 °C.

4. Procédé selon la revendication 1, dans lequel le gaz sous pression est délivré pendant une période de temps de 1 à 20 minutes.

5. Procédé selon la revendication 1, dans lequel l'agent d'oxydation est délivré à un débit de 1 à 30 g/min., pendant une période de temps de 1 à 20 minutes.

6. Appareil d'épuration de gaz d'échappement, l'appareil comprenant :
un passage d'écoulement principal (11) équipé d'un filtre (2) destiné à collecter des MP ;
un dispositif d'écoulement de retour (5, 50) destiné à délivrer un gaz sous pression depuis un côté aval d'écoulement de gaz d'échappement par rapport au filtre vers un côté amont d'écoulement de gaz d'échappement par rapport à celui-ci, et à purger des particules qui sont collectées sur le filtre, sur côté amont d'écoulement de gaz d'échappement par rapport au filtre, sous forme de gaz contenant des MP ;
un passage d'écoulement auxiliaire (12) disposé sur un côté amont d'écoulement de gaz d'échappement par rapport au filtre, placé en dérivation à partir du passage d'écoulement principal pour s'étendre à l'écart de celui-ci, équipé d'un filtre secondaire (3) destiné à filtrer des MP, et permettant au gaz contenant des MP d'être distribué à travers lui lorsque l'appareil d'écoulement de retour est actionné ;
un moyen destiné à délivrer un agent d'oxydation (6) au passage d'écoulement auxiliaire, le moyen délivrant un agent d'oxydation étant disposé sur un côté amont d'écoulement de gaz d'échappement par rapport au filtre secondaire ;
un passage d'écoulement de dérivation (13) disposé sur un côté amont d'écoulement de gaz d'échappement par rapport au filtre, placé en dérivation à partir du passage d'écoulement principal pour s'étendre à l'écart de celui-ci, et permettant à des gaz d'échappement d'être distribués à travers lui lorsque le dispositif d'écoulement de retour est actionné ; et
une soupape de commutation (4) destinée à commuter le l'écoulement de gaz d'échappement du passage d'écoulement principal sur le passage d'écoulement de dérivation ou vice versa ;
lorsque le dispositif d'écoulement de retour est actionné, la soupape de commutation conduit en outre les gaz d'échappement du passage d'écoulement principal vers le passage d'écoulement de dérivation ; les MP qui sont contenues dans les gaz contenant des MP purgés sur le côté amont d'écoulement de gaz d'échappement par rapport au filtre, s'écoulant dans le passage auxiliaire pour être collectées sur le filtre secondaire ;
**caractérisé en ce que :**
le moyen délivrant un agent d'oxydation est disposé dans le passage d'écoulement auxiliaire, et
l'agent d'oxydation qui est délivré à partir du moyen délivrant un moyen d'oxydation, élimine les MP qui sont collectées sur le filtre secondaire, par voie d'oxydation.

7. Appareil selon la revendication 6, comprenant en outre, un second filtre (21) et un second dispositif d'écoulement de retour qui sont disposés dans le passage d'écoulement de dérivation et qui fonctionnent de la même manière que le filtre et le dispositif d'écoulement de retour.

8. Appareil selon la revendication 7, comprenant en outre une soupape d'ouverture et de fermeture (40) destinée à ouvrir et à fermer le passage d'écoulement auxiliaire, la soupape d'ouverture et de fermeture étant disposée sur un côté aval d'écoulement de gaz d'échappement par rapport au passage auxiliaire, dans lequel les gaz d'échappement s'écoulent à la fois dans le passage d'écoulement principal et dans le passage de dérivation lorsque la soupape d'ouverture et de fermeture ferme le passage d'écoulement auxiliaire.

9. Appareil selon la revendication 6, dans lequel le filtre comprend une couche de revêtement catalytique.

10. Appareil selon la revendication 6, dans lequel le dispositif d'écoulement de retour délivre un gaz sous pression dont la température chute à l'intérieur d'une plage allant de la température ambiante à 300 °C.

11. Appareil selon la revendication 6, dans lequel le dispositif d'écoulement de retour délivre le gaz sous pression pendant une période de temps de 1 à 20 minutes.

12. Appareil selon la revendication 6, dans lequel le moyen délivrant un agent d'oxydation délivre l'agent d'oxydation à un débit de 1 à 30 g/min., pendant une période de temps de 1 à 20 minutes.
